(19) Europäisches Patentamt
European Patent Office
Office européen des brevets

(11) **EP 3 671 272 A1**

(12) **EUROPEAN PATENT APPLICATION**

(43) Date of publication:
**24.06.2020 Bulletin 2020/26**

(21) Application number: **18214373.5**

(22) Date of filing: **20.12.2018**

(51) Int Cl.:
*G01S 15/93* (2020.01)   *G01S 17/66* (2006.01)
*G01S 17/87* (2020.01)   *G01S 17/93* (2020.01)
*G01S 13/72* (2006.01)   *G01S 13/87* (2006.01)
*G01S 13/93* (2020.01)   *G01S 15/66* (2006.01)
*G01S 15/87* (2006.01)   *G01S 13/86* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Veoneer Sweden AB
447 83 Vårgårda (SE)**

(72) Inventors:
• **Elsner, Philipp
80992 München (DE)**
• **Ayek, Morris
85221 Dachau (DE)**

(74) Representative: **Sandstedt, Jonas Sven James
WESTPATENT AB
Almekärrsvägen 11
443 39 Lerum (SE)**

(54) **VEHICLE SENSOR FUSION BASED ON FUZZY SETS**

(57)    A method for vehicle sensor fusion of one or more tracks representing object motion estimated by two or more vehicle sensors, the method comprising;
obtaining at least a first track from a first vehicle sensor and at least a second track from a second vehicle sensor, wherein the first and the second track correspond to the same object motion;
obtaining track reliability data for each track, wherein the reliability data comprises track life time, track detection history, track range and track angle;
determining a track reliability weight for each track based on the track reliability data, wherein the determining comprises quantifying grades of membership into a plurality of predetermined fuzzy sets; and
fusing the first track and the second track based on the track reliability weights.

FIG. 1

EP 3 671 272 A1

**Description**

The present disclosure relates to vehicle sensor systems, such as radio detection and ranging (radar) and light detection and ranging (lidar) systems. There are disclosed improved methods for fusing data from two or more sensors.

A vehicle may comprise a plurality of vehicle sensors, such as radio detection and ranging (radar) sensors and light detection and ranging (lidar) sensors. The sensors monitor the environment surrounding the vehicle to detect objects in a vicinity of the vehicle. Two different sensors may have overlapping fields of view (FOV), which means that they may detect the same object in a time period when the object is located in the overlapping region. Object detections acquired over time may be used to track an object, i.e., represent object motion over time as an object track.

Sensor fusion relates to the problem of merging track data obtained from a plurality of vehicle sensors into a single track. If done correctly, the reliability of the track data after fusion is higher than the reliability of the tracks obtained from individual sensors.

Known sensor fusion strategies can be classified into two groups according to the level of fusion; Sensor-To-Global (STG) sensor fusion involves a global tracker which merges track data obtained from each sensor.

Sensor-To-Sensor (STS) sensor fusion involves merging track data directly on sensor level without a global tracker.

A covariance matrix can be used to determine reliability, i.e., accuracy, of a track. However, obtaining a covariance matrix which accurately represents track reliability may be difficult in some scenarios. Also, in many practical scenarios using hybrid tracking processes, i.e., processes tracking both velocity and position, it may be difficult to interpret the values of a covariance matrix in terms of reliability. Thus, there is a need for vehicle sensor fusion methods which do not require a covariance matrix.

Examples of using covariance matrices to determine reliability are found in "Track level fusion algorithms for automotive safety applications" by B. Duraisamy, T. Schwarz, and C. Wöhler, Signal Processing Image Processing & Pattern Recognition (ICSIPR), 2013 International Conference on, pages 179-184, IEEE, 2013, and references cited therein.

Further examples are found in "Adaptive track fusion in a multisensory environment" by C. Beugnon, T. Singh, J. Llinas, and R. Saha, Information Fusion, 2000. FUSION 2000. Proceedings of the Third International Conference on, volume 1, pages TUC2-24, IEEE, 2000, and references cited therein.

It is an object of the present disclosure to provide methods for STS vehicle sensor fusion which do not require obtaining and/or using a covariance matrix. This object is at least partly obtained by a method for vehicle sensor fusion of one or more tracks representing object motion estimated by two or more vehicle sensors. The method comprises obtaining at least a first track from a first vehicle sensor and at least a second track from a second vehicle sensor. The first and the second track correspond to the same object motion. The method also comprises obtaining track reliability data for each track. The reliability data comprises track life time, track detection history, track range and track angle, and determining a track reliability weight for each track based on the track reliability data. This determining comprises quantifying grades of membership into a plurality of pre-determined fuzzy sets. The method fuses or merges the first track and the second track based on the track reliability weights.

This method is based on fuzzy set membership degrees and trust functions, and does not need covariance matrix information, which is an advantage. The method is able to use different types of information, and via the fuzzy set membership grades combine the different types of information into a single reliability measure, which is an advantage.

The method uses a rather large number of input data types, i.e., track life time, track detection history, track range and track angle, which allows for determining a robust reliability measure even if some input data is erroneous.

The method is versatile, since the fuzzy sets can be configured to incorporate a wide variety of different input data types. Also, the method can be adapted and optimized to different scenarios by tuning the disclosed membership and trust functions.

According to aspects, the determining comprises assigning a higher reliability weight to a track associated with medium track life time compared to a track associated with a shorter life time and/or a longer life time.

It has been realized that medium aged tracks are more reliable than young and old tracks. By using the disclosed method, this type of information can be incorporated into the reliability measure in a robust and efficient manner.

According to aspects, the determining comprises assigning a higher reliability weight to a track associated with medium range compared to a track associated with a shorter range and/or a longer range. Also, according to aspects, the determining comprises assigning a higher reliability weight to a track associated with detections close to a center angle of the vehicle sensor field of view compared to a track associated with detections further away from the center angle.

It has been realized that detections and tracks in the center of a sensor field of view are more reliable than detections and tracks on the borders of the sensor field of view. Again, by using the disclosed method, this type of information can be incorporated into the reliability measure in a robust and efficient manner, which is an advantage.

According to aspects, the determining comprises assigning a higher reliability weight to a track associated with more object detections compared to a track associated with fewer object detections.

This way, tracks associated with more detections are deemed more reliable than tracks associated with fewer detections.

According to aspects, the determining comprises assigning a higher reliability weight to a track associated with more recent object detections compared to a track associated with less recent object detections.

According to aspects, the fusing comprises fusing the first and the second track based on a weighted average of fuzzy set membership degrees and respective trust functions.

According to aspects, the method comprises associating tracks obtained from the first vehicle sensor with corresponding tracks obtained from the second vehicle sensor. Associated tracks are estimated to represent the same object motion.

Associating tracks is a pre-cursor to merging and fusion. It may be part of the disclosed methods, but the main concepts are related to determining reliability of tracks.

This way the different data type reliability weights are combined into a single reliability value, which enables efficient fusion of the tracks.

There are also disclosed herein arrangements, systems, electronic control units (ECU), vehicles and computer program products associated with the above-mentioned advantages.

BRIEF DESCRIPTION OF THE DRAWINGS

The present disclosure will now be described in detail with reference to the appended drawings, where:

Figure 1 schematically illustrates a vehicle with a sensor system in a tracking scenario;

Figures 2A-2B schematically illustrates a sensor fusion process;

Figure 3 shows an example sensor signal processing system;

Figure 4 is a flow chart illustrating methods;

Figures 5-11 are graphs illustrating aspects of track reliability weights;

Figure 12 is a table illustrating weighting rules; and

Figure 13 schematically illustrates a computer program product.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

The techniques and methods disclosed herein are applicable to a wide variety of sensor data types, including radar sensor and lidar sensor data, but also, e.g., vision-related sensors such as camera and IR sensors, as well as ultrasound sensors.

It is assumed herein that sensor data is output in cycles. For instance, a radar cycle may correspond to a radar signal frame, e.g., a frequency modulated continuous wave (FMCW) chirp sequence. A lidar cycle may correspond to a scan or a group of scans.

A track is a sequence of data points representing object motion over time. For instance, a radar sensor regularly produces object detections which can be associated with a physical object. The object detections may relate to a position and relative velocity of an object, or to a distance and bearing of the object. The detections can be filtered by a tracking filter, such as a Kalman or particle filter in a known manner. More advanced tracking methods include multiple hypothesis testing (MHT).

A track reliability measure indicates how reliable the track data is, given some reliability criteria. For instance, track reliability may relate to a measure of error in the position estimates associated with the track. A reliably estimated object track is associated with a smaller position error than a less reliably estimated object track. Position error may be measured, e.g., in terms of mean-squared error (MSE) or average error, or maximum error over a limited time period.

Track reliability may also relate to a probability that the track represents a real physical object of interest and is not just representative of clutter or erroneous detections.

Sensor fusion, i.e., the merging of track data into a single track, can be performed in a number of different known ways, some of which were referred to above. Many sensor fusion algorithms rely on weights associated with the sensor data. Naturally, sensor data associated with a higher weight, or a higher reliability measure, will have a larger impact on the merged results than sensor data associated with lower weight, or lower reliability measure.

For example, a sensor fusion method may comprise weighting position estimates of two tracks into a single track with a single time-sequence of position estimates. The new position estimates can then be determined as, e.g., $p=(w1*p1+w2*p2)/(w1+w2)$, where $p1$ and $p2$ are the position estimates to be merged into a single position estimate $p$, in two or three dimensions, and $w1$ and $w2$ are the reliability weights. Thus, if $w1$ is larger than $w2$, then $p1$ influences the end result $p$ more than $p2$.

It is appreciated that weights may change over time, such that a single track can be associated with high weights for some time periods and lower weights for some other time periods. The position estimate is then variably influenced by the different track data sets during sensor fusion.

Many sensor fusion algorithms based on weights and/or reliability measures are known and will not be discussed in more detail here.

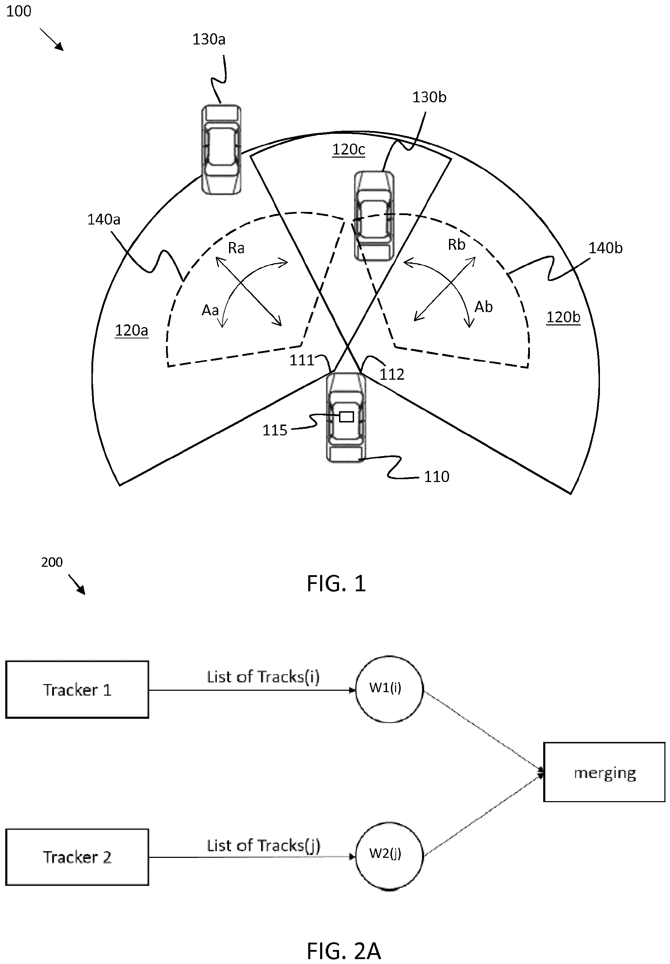

Figure 1 shows a traffic scenario 100, where a vehicle 110 is using two separate sensor systems 111, 112 to detect presence and relative positions of other vehicles 130a, 130b. The first vehicle sensor 111 has a FOV 120a covering a sector to the left of the vehicle 110, while the second vehicle sensor 112 has a FOV 120b covering a sector to the right of the vehicle 110.

The vehicle 110 comprises an electronic control unit (ECU) 115, arranged to process sensor data.

The first and second vehicle sensors have partly overlapping fields of view; The first vehicle 130a is only detectable by the first vehicle sensor 111. This first vehicle sensor outputs a list of tracks comprising estimated motion of the first vehicle 130a over time. The second vehicle 130b is located in the overlapping region 120c. Therefore, the motion of the second vehicle 130b is comprised in the track list output from both the first vehicle sensor 111 and from the second vehicle sensor 112. To improve on the signal quality of the estimated motion of the second vehicle 130b over time, sensor fusion can be applied to merge the tracks from the first and second vehicle sensors to a single track representing motion of the second object while it is located in the overlapping region 120c.

Figure 2A schematically illustrates a sensor fusion process 200 which can be applied to the first and second vehicle sensor data outputs. A first tracker 'Tracker 1' outputs a list of tracks indexed by some variable i. A second tracker 'Tracker 2' also outputs a list of tracks, indexed by some variable j. The first and the second tracker may be comprised in the first and second vehicle sensors, or they can be separate entities, or modules comprised in the control unit 115.

It is desired to merge the first and second list of tracks. Therefore, reliability weights W1(i) and W2(j) have been determined. These reliability weights indicate reliability of the tracks in the list of tracks. Some tracks may be estimated to comprise more reliable data, while some other tracks may be estimated to comprise less reliable data. Also, the reliability of a track may be time variable. This means that some time segments of a track can be estimated as reliable, while other time segments can be estimated as less reliable.

The list of tracks from each tracker is weighted by the reliability weights, and then merged in a merging process. The merging step may require time alignment of detections in the two track lists. Also, in case different sampling rates or scan rates have been used, interpolation may be required. Re-sampling and interpolation are known concepts which will not be discussed in detail herein.

The merging process then outputs a single list of tracks, where some pairs of tracks have been merged, and some other tracks which are not associated with a corresponding track in the other list are left as is.

A purpose of the present disclosure is to describe methods for generation of the weights W1 and W2 based on fuzzy logic, which do not require having access to a covariance matrix describing reliability of the different tracks.

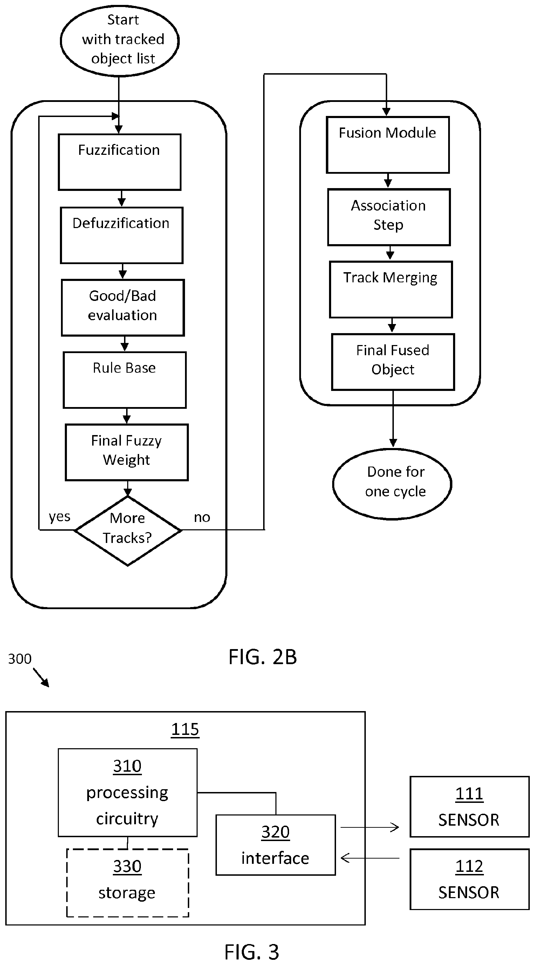

Figure 2B shows an example work flow of a fuzzy weighting sensor fusion method. The process starts with the tracked object lists, given as input. The lists comprise detected and tracked objects from at least two different sensors, such as the first and the second vehicle sensors 111,112. The first processing step is a fuzzification of the input object. This is done to transform numeric attribute values of the tracks into grades of membership corresponding to fuzzy sets. In this step, a linguistic variable is assigned to each attribute.

After the fuzzification of each single attribute is completed, the resulting weights are evaluated. In a defuzzification step, a trust value is assigned to each object. Based on each defuzzied attribute in combination with a predetermined rule base, the final weight is calculated and assigned to the tracked object.

For the assessment of track quality or reliability, the track life time, track detection history, track range and track angle are considered;

Track life time is related to how long the track has been present in the list of tracks. Newly detected objects give rise to young tracks, which then eventually become old tracks.

Track detection history relates to how many actual sensor detections which have been used to estimate the track. Some tracks are based on many sensor detections, while some other tracks comprise time portions which have been interpolated between scarce object detections.

Track range relates to the distance of the object associated with the track. Some detected objects are located far from the vehicle sensor, while other objects are located closer to the vehicle sensor.

Track angle relates to the detection angle of the object which is being tracked, with respect to a sensor boresight direction. Some objects are detected close to sensor boresight, while others are detected at an angle with respect to sensor boresight.

The fuzzification is used to normalize the input variables and to bring them into a common universe to compare the different numerical attributes. Furthermore, it is used to make the evaluation of the parameters more differentiated. Fuzzification is the process of converting numeric values, like a counter, into something fuzzy, e.g. young, mid aged and old. This is done by creating linguistic variables and corresponding membership functions. With the membership functions, a degree of membership is assigned to the numeric value. The degree of membership states how certain it is, that the value belongs to the corresponding class.

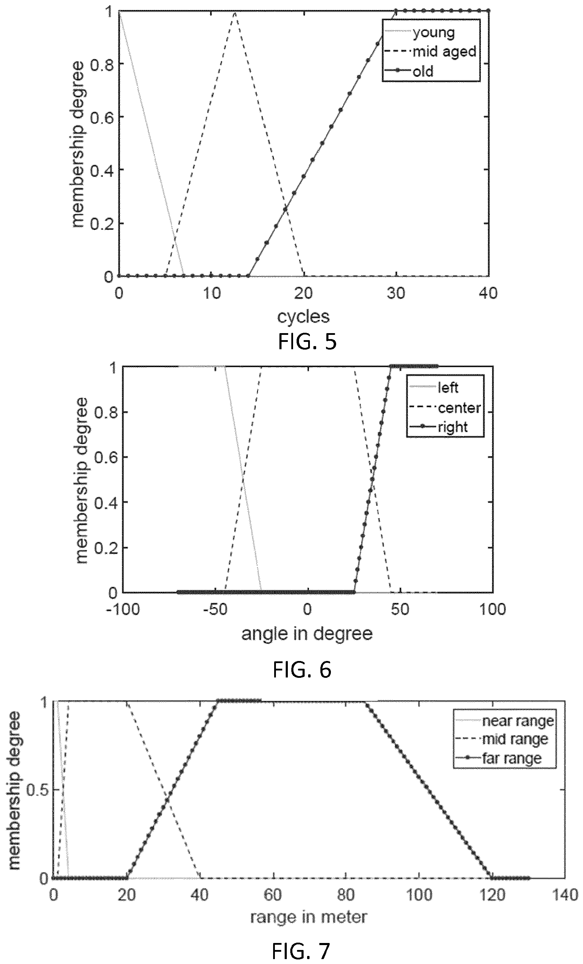

Examples of fuzzification and defuzzification, including reliability weight determination, will be given below in connection to Figures 5-11.

Figure 3 schematically illustrates, in terms of a number of functional units, the components of a sensor signal processing system 300 according to an embodiment of the discussions herein. Processing circuitry 310 is provided using any combination of one or more of a suitable central processing unit CPU, multiprocessor, microcontroller, digital signal processor DSP, etc., capable of executing software instructions stored in a computer program product, e.g. in the form of a storage medium 330. The processing circuitry 310 may further be provided as at least one application specific integrated circuit ASIC, or field programmable gate array FPGA. The processing circuitry thus comprises a plurality of digital logic components.

Particularly, the processing circuitry 310 is configured to cause the control unit 115 to perform a set of operations, or steps. For example, the storage medium 330 may store the set of operations, and the processing circuitry 310 may be configured to retrieve the set of operations from the storage medium 330 to cause the control unit 115 to perform the set of operations. The set of operations may be provided as a set of executable instructions. Thus, the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The control unit 115 further comprises an interface 320 for communications with at least one external device, such as the first and second vehicle sensors 111, 112. As such the interface 320 may comprise one or more transmitters and receivers, comprising analogue and digital components and a suitable number of ports for wireline communication.

The processing circuitry 310 controls the general operation of the transceiver, e.g. by sending data and control signals to the interface 320 and the storage medium 330, by receiving data and reports from the interface 320, and by retrieving data and instructions from the storage medium 330. Other components, as well as the related functionality, of the control node are omitted in order not to obscure the concepts presented herein.

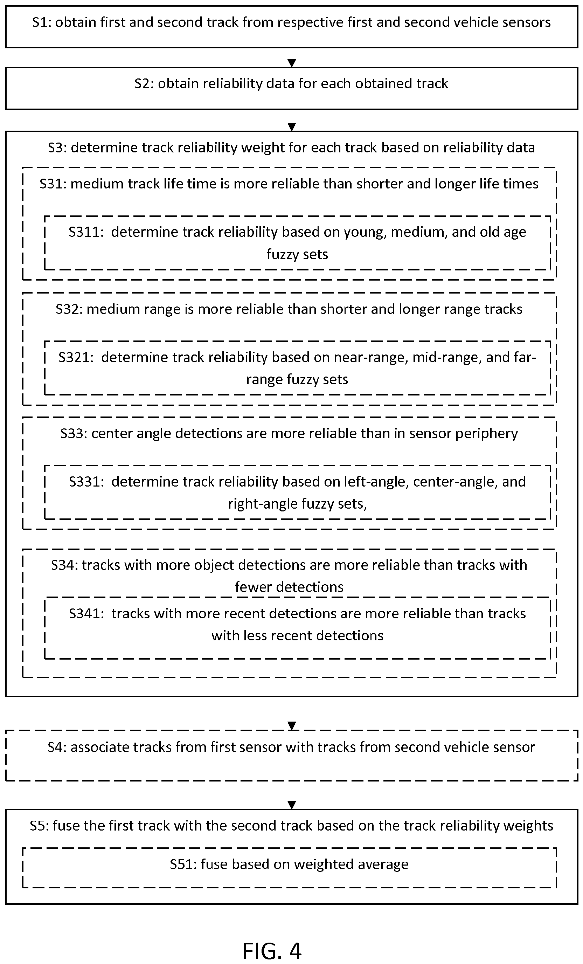

Figure 4 is a flow chart illustrating methods. In particular, there is illustrated a method for vehicle sensor fusion of one or more tracks representing object motion estimated by two or more vehicle sensors 111,112.

The first and second vehicle sensors may, e.g., be radar or lidar sensors, or a combination of different types of sensors.

The method comprises obtaining S1 at least a first track from a first vehicle sensor 111 and at least a second track from a second vehicle sensor 112. In order to not complicate the disclosure, the first and the second track are assumed to correspond to the same object motion.

In case additional tracks are obtained from the sensors, then the method may, according to aspects, comprise associating S4 tracks obtained from the first vehicle sensor with corresponding tracks obtained from the second vehicle sensor. Associated tracks are then estimated to represent the same object motion.

The method also comprises obtaining S2 track reliability data for each track. The reliability data comprises at least track life time, track detection history, track range and track angle.

The method furthermore comprises determining S3 a track reliability weight for each track based on the track reliability data. Notably, the determining comprises quantifying grades of membership into a plurality of pre-determined fuzzy sets. Fuzzy sets will be discussed below, where examples are also given.

The method also comprises fusing S5 the first track and the second track based on the track reliability weights.

According to some aspects, the determining comprises assigning S31 a higher reliability weight to a track associated with medium track life time compared to a track associated with a shorter life time and/or a longer life time.

According to some aspects, a medium track life time corresponds to between 10 and 20 sensor detection cycles.

According to aspects, the determining comprises, for each track, assigning S311 track membership degrees to young, medium, and old age fuzzy sets, wherein each set is associated with a respective trust function, wherein the reliability weight is determined as a trust value based on the membership degrees and trust functions.

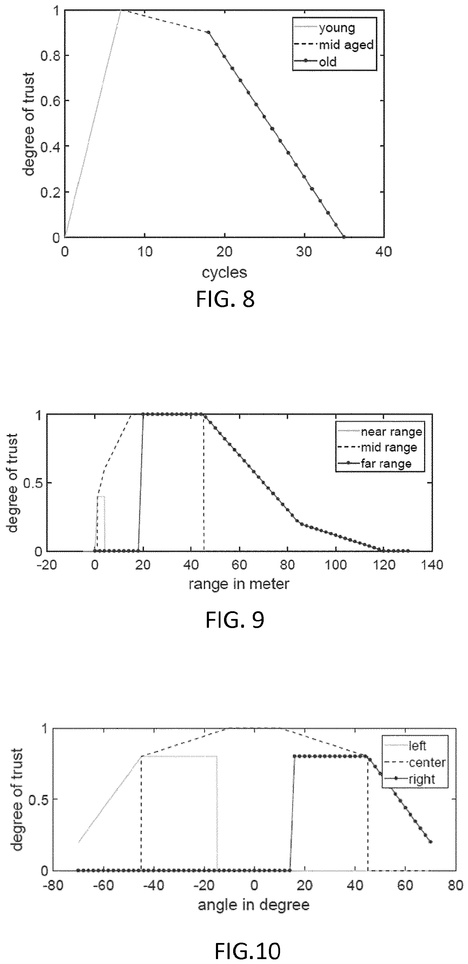

These membership degrees are exemplified in Figure 5. The corresponding trust function is exemplified in Figure 8.

With reference to Figure 1, it has been realized that the most reliable detections and track estimates are made in a center 140a, 140b of the field of view for a given sensor. The center 140a, 140b is located at medium ranges Ra, Rb and at angles Aa, Ab in a range around sensor boresight angle. This area of increased reliability can be defined by a range span and an angle span.

Thus, according to some aspects, the determining comprises assigning S32 a higher reliability weight to a track associated with medium range compared to a track associated with a shorter range and/or a longer range.

A medium range may according to an example correspond to between 20 and 40 meters.

According to some aspects, the determining comprises, for each track, assigning S321 track membership degrees to near-range, mid-range, and far-range fuzzy sets, wherein each set is associated with a respective trust function, wherein the reliability weight is determined as a trust value based on the membership degrees and trust functions.

These membership degrees are exemplified in Figure 5. The corresponding trust function is exemplified in Figure 8.

According to some aspects, the determining comprises assigning S33 a higher reliability weight to a track associated with detections close to a center angle of the vehicle sensor field of view compared to a track associated with detections further away from the center angle.

Center angles are comprised in the region 140, which is associated with increased reliability.

According to an example, the center of the vehicle sensor field of view is between -15 to 15 degrees from a sensor boresight direction (corresponding to zero degrees).

According to some aspects, the determining comprises, for each track, assigning S331 track membership degrees to left-angle, center-angle, and right-angle fuzzy sets, wherein each set is associated with a respective trust function, wherein the reliability weight is determined as a trust value based on the membership degrees and trust functions.

These membership degrees are exemplified in Figure 6. The corresponding trust function is exemplified in Figure 10.

According to some aspects, the determining comprises assigning S34 a higher reliability weight to a track associated with more object detections compared to a track associated with fewer object detections.

More object detections are more likely to generate a high reliability track, e.g., since noise and distortion can be suppressed by filtering the large number of data points.

According to some aspects, the determining comprises assigning S341 a higher reliability weight to a track associated with more recent object detections compared to a track associated with less recent object detections.

The recent detections are more reliable in that they represent the current state of the tracked object, rather than the history of the object motion.

According to some aspects, the fusing comprises fusing S51 the first and the second track based on a weighted average of fuzzy set membership degrees and respective trust functions.

The fusing of tracks can be performed in a number of different ways. For instance, track position estimates can be averaged using the reliability measures as weights. There are known methods for sensor fusion which accept reliability weights as input. It is appreciated that the disclosed methods are mainly related to determining reliability weights, which can then be used in a number of different methods and applications.

With reference again to Figure 3, there is also disclosed herein a control unit 115 for vehicle sensor fusion of one or more tracks representing object motion estimated by two or more vehicle sensors 111, 112. The control unit comprises processing circuitry 310. The processing circuitry comprises;

a first obtaining module Sx1 for obtaining at least a first track from a first vehicle sensor and at least a second track from a second vehicle sensor, wherein the first and the second track correspond to the same object motion;

a second obtaining module Sx2 for obtaining track reliability data for each track, wherein the reliability data comprises track life time, track detection history, track range and track angle;

a determining module Sx3 for determining a track reliability weight for each track based on the track reliability data, wherein the determining comprises quantifying grades of membership into a plurality of pre-determined fuzzy sets; and

a sensor fusion module Sx5 for fusing the first track and the second track based on the track reliability weights.

The different modules may be comprised in, e.g., the processing circuitry, and are not shown in Figure 3.

One example of the method illustrated in Figure 4 will now be described, with reference to Figures 5-11.

Fuzzification of the life time; The overall intention of fuzzifying the lifetime is to achieve a smoother and better-connected track. The first step for the fuzzification is the creation of the linguistic variables 'young', 'mid aged' and 'old'. Based on the membership functions of the linguistic variables, the degree of membership is assigned. An example of membership functions is shown in Figure 5. Tracks having age below about 7 cycles are considered young, tracks having age between 5-20 cycles are considered mid aged, and tracks having age above 15 cycles are members of the 'old' set.

Fuzzification of the azimuth or angle; The field of view of the radar sensor has been chosen because the sensor shows different accuracy over it. For a radar sensor which can be used in this system, the field of view can be defined as starting from -70 degrees and ending at 70, i.e., a total field of view of 140 degrees. Knowing that the mounting angle is 45 degrees, the zero point or bore sight is shifted by 45 degrees. The strict input values are fuzzified and assigned to suitable linguistic variables. The field of view is separated into three fuzzy sets called 'left', 'center' and 'right'. For the left and right section, a ramp function describes membership and for the center a trapezoid function describes membership. Figure 6 shows the resulting membership functions.

Fuzzification of the range; Although the range is the most accurate measurement of a radar sensor, it is necessary to create linguistic variables also for this parameter. At different distances different errors occur. This is the reason for separating the range into three areas or fuzzy sets; 'near-range', 'mid-range' and 'far-range'. The linguistic variable of the near-range is evaluated by using a ramp function. The mid and far-range are evaluated with trapezoid functions. The function for the mid-range has been chosen to create a smooth transition between the sections. These membership functions are exemplified in Figure 7.

The defuzzification is based on a priori knowledge, which is used for designing the membership functions applied during the defuzzification. The functions are used to assign a value of trust stating how accurate the object could be tracked or detected. To calculate the trust value for each attribute the weighted average method is used to defuzzify the membership functions.

This is done by combining the previously assigned degree of membership mem_degreex and the in this step assigned trust value trustx to calculate a combined trust for each attribute;

```
defuzz_trustx = (mem_degree1 * trust1 + ... + mem_degreen *
trustn)/ (mem_degree1 + ... + mem_degreen).
```

Defuzzification of the life time; For the defuzzification of the life time, three functions corresponding to the three membership values were implemented. Figure 8 shows the combined resulting function. The result of these three functions are three trust values trust_lfx for the lifetime. The trust value, which is used for the further processing is calculated using the following equation:

```
trustlf = ((memlf_1 · trust_lf1) + (memlf_2 · trust_lf2) +
(memlf_3 · trust_lf3)) / (trust_lf1 + trust_lf2 + trust_lf3)
```

Defuzzification of the range; To define a weight based on the range information, three functions are defined. One function for the near range, one for the mid-range and one for the far range.

All three functions are designed to reflect the characteristics of each area. Figure 9 depicts the functions for the defuzzification.

Defuzzification of the azimuth; The FOV is defined in a range of 0 to 140 degrees. To defuzzify the position of the tracked objects, three functions were designed to assign a weight to the fuzzified objects. The combined functions Figure 10 for the azimuth are designed thus, that it trusts the objects at the border of the field of view less than the ones in the center of the FOV.

Evaluation of the association history; the association history represents the a priori knowledge about the tracking process. The association history is a binary variable consisting of 16 bits. The MSB represents the latest cycle and the LSB stands for the oldest observable cycle. The association history states if the track under observation is associated with a detection in the current cycle. If the tracked object is associated with a detection, it is updated with the new information gained from the FMCW radar sensor. With the update, a more precise position estimate can be created. If the object is updated, a one is assigned. Otherwise the bit is set to zero. With this history information it is possible to look back 16 cycles for each track. Based on this, it is possible to draw conclusions on the quality of the tracking.

To create a more differentiated evaluation of the association history, the bit pattern is separated into four parts consisting of four bits each. For calculating the weight, first all ones of the 16-bit variable are counted. The second step is to count the ones of the four sub sets. For this step, a simple linear function is used:

```
y_of_line = (y2 - y1)/(x2 - x1) * (x - x1) + y1
```

The resulting weight expresses how good the tracking was in these four cycles. The next step is to consider how recently the association of the object happened. This done in the same step in which the final weight is calculated with the equation shown below:

R = w1 * y1 + w2 * y2 + w3 * y3 + w4 * y4, where according to an example w1 = 0.4, w2 = 0.3, w3 = 0.2, and w4 = 0.1.

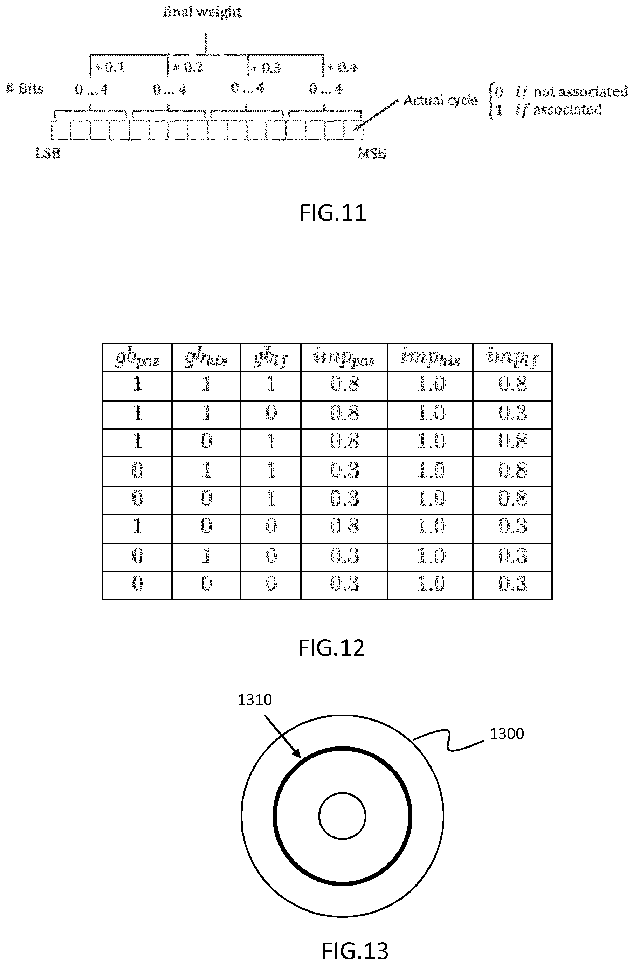

This formula is normalized between zero and one due to the assigned weights. The values which are used to weight the single bit patterns are defined in the table below. Bits representing associations closer the current cycle are stronger weighted and the older associations are taken weaker into account. The whole process is also displayed in Figure 11.

If the resulting value R is high, the object is supposed to be associated with detections for many cycles. If an object could be associated over almost all cycles its position estimation has a better quality than the position estimate of an object which is not that often associated.

Evaluation of trust factors; The next step is to prepare the attributes for the evaluation. The evaluation is done with a rule base. Based on this rule base the importance of each attribute is assigned. The first step of the importance assignment is the rough separation of the defuzzied values in good and bad trust values. If the trust value was good a one is assigned if not a zero is assigned.

Rule base / Final weight assignment; The next step is the adaption of the weight, based on the good-bad-evaluation and the used trust value. For this step the rule base is used. It is designed like a look up table in which, dependent on whether the value was good or bad, one weight is assigned more or less importance. The table is shown in Figure 12.

With the good-bad-evaluation and with the rule base, the possibility to further combine the parameters for an extended evaluation is given. The final weight is calculated based on the trust values and the assigned importance;

```
final_trust = (imppos * defuzzpos + imphis * defuzzhist + implf
* defuzzlf) / (imppos + imphis + implf),
```

where imppos and defuzzpos relate to position importance and trust value, imphis and defuzzhis relate to history importance and trust value, implf and defuzzlf relate to lifetime importance and trust value. The values for imppos, imphis, and implf may be obtained from, e.g., the table in Figure 12. The values for defuzzpos, defuzzhis, and defuzzlf are obtained by weighting the trust functions by the respective fuzzy set membership degrees, and normalizing, according to;

```
defuzz_x = (mem_degree1 * trust1 + ... + mem_degreen * trustn)/
(mem_degree1 + ... + mem_degreen).
```

Figure 13 shows a computer program product 1300 comprising computer executable instructions 1310 to execute any of the methods disclosed herein.

**Claims**

1. A method for vehicle sensor fusion of one or more tracks representing object motion estimated by two or more vehicle sensors, the method comprising;
   obtaining (S1) at least a first track from a first vehicle sensor and at least a second track from a second vehicle sensor, wherein the first and the second track correspond to the same object motion;
   obtaining (S2) track reliability data for each track, wherein the reliability data comprises track life time, track detection history, track range and track angle;
   determining (S3) a track reliability weight for each track based on the track reliability data, wherein the determining comprises quantifying grades of membership into a plurality of pre-determined fuzzy sets; and
   fusing (S5) the first track and the second track based on the track reliability weights.

2. The method according to claim 1, comprising associating (S4) tracks obtained from the first vehicle sensor with corresponding tracks obtained from the second vehicle sensor, wherein associated tracks are estimated to represent the same object motion.

3. The method according to claim 1 or 2, wherein the determining comprises assigning (S31) a higher reliability weight to a track associated with medium track life time compared to a track associated with a shorter life time and/or a longer life time.

4. The method according to claim 3, wherein a medium track life time corresponds to between 10 and 20 sensor detection cycles.

5. The method according to claim 3 or 4, wherein the determining comprises, for each track, assigning (S311) track membership degrees to young, medium, and old age fuzzy sets, wherein each set is associated with a respective trust function, wherein the reliability weight is determined as a trust value based on the membership degrees and trust functions.

6. The method according to any previous claim, wherein the determining comprises assigning (S32) a higher reliability weight to a track associated with medium range compared to a track associated with a shorter range and/or a longer range.

7. The method according to claim 6, wherein a medium range corresponds to between 20 and 40 meters.

8. The method according to claim 6 or 7, wherein the determining comprises, for each track, assigning (S321) track membership degrees to near-range, mid-range, and far-range fuzzy sets, wherein each set is associated with a respective trust function, wherein the reliability weight is determined as a trust value based on the membership degrees and trust functions.

9. The method according to any previous claim, wherein the determining comprises assigning (S33) a higher reliability weight to a track associated with detections close to a center angle of the vehicle sensor field of view compared to a track associated with detections further away from the center angle.

10. The method according to claim 9, wherein the center of the vehicle sensor field of view is between -15 to 15 degrees from a sensor boresight direction.

11. The method according to claim 9 or 10, wherein the determining comprises, for each track, assigning (S331) track membership degrees to left-angle, center-angle, and right-angle fuzzy sets, wherein each set is associated with a respective trust function, wherein the reliability weight is determined as a trust value based on the membership degrees and trust functions.

12. The method according to any previous claim, wherein the determining comprises assigning (S34) a higher reliability weight to a track associated with more object detections compared to a track associated with fewer object detections.

13. The method according to claim 12, wherein the determining comprises assigning (S341) a higher reliability weight to a track associated with more recent object detections compared to a track associated with less recent object detections.

14. The method according to any previous claim, wherein the fusing comprises fusing (S51) the first and the second track based on a weighted average of fuzzy set membership degrees and respective trust functions.

15. A control unit (115) for vehicle sensor fusion of one or more tracks representing object motion estimated by two or more vehicle sensors 111, 112, the control unit comprises processing circuitry 310. The processing circuitry comprises;
a first obtaining module for obtaining at least a first track from a first vehicle sensor and at least a second track from a second vehicle sensor, wherein the first and the second track correspond to the same object motion;
a second obtaining module for obtaining track reliability data for each track, wherein the reliability data comprises track life time, track detection history, track range and track angle;
a determining module for determining a track reliability weight for each track based on the track reliability data, wherein the determining comprises quantifying grades of membership into a plurality of pre-determined fuzzy sets; and
a sensor fusion module for fusing the first track and the second track based on the track reliability weights.

FIG. 1

FIG. 2A

Start
with tracked
object list

Fuzzification

Defuzzification

Good/Bad
evaluation

Rule Base

Final Fuzzy
Weight

yes   More   no
Tracks?

Fusion Module

Association
Step

Track Merging

Final Fused
Object

Done for
one cycle

FIG. 2B

300

115

310
processing
circuitry

330
storage

320
interface

111
SENSOR

112
SENSOR

FIG. 3

S1: obtain first and second track from respective first and second vehicle sensors

S2: obtain reliability data for each obtained track

S3: determine track reliability weight for each track based on reliability data

S31: medium track life time is more reliable than shorter and longer life times

S311: determine track reliability based on young, medium, and old age fuzzy sets

S32: medium range is more reliable than shorter and longer range tracks

S321: determine track reliability based on near-range, mid-range, and far-range fuzzy sets

S33: center angle detections are more reliable than in sensor periphery

S331: determine track reliability based on left-angle, center-angle, and right-angle fuzzy sets,

S34: tracks with more object detections are more reliable than tracks with fewer detections

S341: tracks with more recent detections are more reliable than tracks with less recent detections

S4: associate tracks from first sensor with tracks from second vehicle sensor

S5: fuse the first track with the second track based on the track reliability weights

S51: fuse based on weighted average

FIG. 4

FIG. 5

FIG. 6

FIG. 7

FIG. 8

FIG. 9

FIG.10

final weight

$* 0.1$    $* 0.2$    $* 0.3$    $* 0.4$

\# Bits    0 ... 4    0 ... 4    0 ... 4    0 ... 4

Actual cycle $\begin{cases} 0 & if \text{ not associated} \\ 1 & if \text{ associated} \end{cases}$

LSB                 MSB

## FIG.11

| $gb_{pos}$ | $gb_{his}$ | $gb_{lf}$ | $imp_{pos}$ | $imp_{his}$ | $imp_{lf}$ |
|---|---|---|---|---|---|
| 1 | 1 | 1 | 0.8 | 1.0 | 0.8 |
| 1 | 1 | 0 | 0.8 | 1.0 | 0.3 |
| 1 | 0 | 1 | 0.8 | 1.0 | 0.8 |
| 0 | 1 | 1 | 0.3 | 1.0 | 0.8 |
| 0 | 0 | 1 | 0.3 | 1.0 | 0.8 |
| 1 | 0 | 0 | 0.8 | 1.0 | 0.3 |
| 0 | 1 | 0 | 0.3 | 1.0 | 0.3 |
| 0 | 0 | 0 | 0.3 | 1.0 | 0.3 |

## FIG.12

1310

1300

## FIG.13

Europäisches
Patentamt

European
Patent Office

Office européen
des brevets

**EUROPEAN SEARCH REPORT**

Application Number

EP 18 21 4373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAFTI A D ET AL: "Novel adaptive Kalman filtering and fuzzy track fusion approach for real time applications", INDUSTRIAL ELECTRONICS AND APPLICATIONS, 2008. ICIEA 2008. 3RD IEEE CONFERENCE ON, IEEE, PISCATAWAY, NJ, USA, 3 June 2008 (2008-06-03), pages 120-125, XP031293699, ISBN: 978-1-4244-1717-9 * Abstract, Chapter I, II, III.C, V; figure 1 * & JEFFREY T W ED  - INSTITUTE OF ELECTRICAL AND ELECTRONICS ENGINEERS: "TRACK QUALITY ESTIMATION FOR MULTIPLE-TARGET TRACKING RADARS", PROCEEDINGS OF THE NATIONAL RADAR CONFERENCE. DALLAS, MAR. 29 - 30, 1989; [PROCEEDINGS OF THE NATIONAL RADAR CONFERENCE], NEW YORK, IEEE, US, vol. CONF. 4, 29 March 1989 (1989-03-29), pages 76-79, XP000077750, * Abstract, Chapter 1, 2.3 * ----- | 1-15 | INV. G01S15/93 G01S17/66 G01S17/87 G01S17/93 G01S13/72 G01S13/87 G01S13/93 G01S15/66 G01S15/87 ADD. G01S13/86 |
| X | SHI YANJUN ET AL: "An Adaptive Track Fusion Approach with Fuzzy Computation for Multi-sensor", 2018 IEEE INTERNATIONAL CONFERENCE ON SMART INTERNET OF THINGS (SMARTIOT), IEEE, 17 August 2018 (2018-08-17), pages 245-249, XP033400842, DOI: 10.1109/SMARTIOT.2018.00051 [retrieved on 2018-09-13] * Abstract, Chapter I, II * ----- -/-- | 1-15 | TECHNICAL FIELDS SEARCHED (IPC) G01S |

The present search report has been drawn up for all claims

| Place of search | Date of completion of the search | Examiner |
|---|---|---|
| Munich | 22 May 2019 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 21 4373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASHRAF M AZIZ: "A new fuzzy clustering approach for data association and track fusion in multisensor-multitarget environment", AEROSPACE CONFERENCE, 2011 IEEE, IEEE, 5 March 2011 (2011-03-05), pages 1-10, XP031938015, DOI: 10.1109/AERO.2011.5747430 ISBN: 978-1-4244-7350-2 * Abstract, Chapter 1, 2, 3, 4-1, 4.2 * | 1-15 | |
| X | KONERU UJWAL ET AL: "Fuzzy Logic Based Sensor Fusion for Accurate Tracking", 26 September 2011 (2011-09-26), IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL. 8814; [LECTURE NOTES IN COMPUTER SCIENCE; LECT.NO, XP047447245, ISBN: 978-3-642-17318-9 * Abstract, Chapter 1-3 * | 1-15 | TECHNICAL FIELDS SEARCHED (IPC) |
| A,D | BHARANIDHAR DURAISAMY ET AL: "Track level fusion algorithms for automotive safety applications", SIGNAL PROCESSING IMAGE PROCESSING&PATTERN RECOGNITION (ICSIPR), 2013 INTERNATIONAL CONFERENCE ON, IEEE, 7 February 2013 (2013-02-07), pages 179-184, XP032363606, DOI: 10.1109/ICSIPR.2013.6497983 ISBN: 978-1-4673-4861-4 * the whole document * | 1-15 | |

The present search report has been drawn up for all claims

| Place of search | Date of completion of the search | Examiner |
|---|---|---|
| Munich | 22 May 2019 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Track level fusion algorithms for automotive safety applications. **B. DURAISAMY ; T. SCHWARZ ; C. WÖHLER.** Signal Processing Image Processing & Pattern Recognition (ICSIPR), 2013 International Conference on. IEEE, 2013, 179-184

- Adaptive track fusion in a multisensory environment. **C. BEUGNON ; T. SINGH ; J. LLINAS ; R. SAHA.** Information Fusion, 2000. FUSION 2000. Proceedings of the Third International Conference on. IEEE, 2000, vol. 1, TUC2-24